(19)

**Europäisches Patentamt**
**European Patent Office**
**Office européen des brevets**

(11) **EP 1 935 856 A2**

(12) **EUROPEAN PATENT APPLICATION**

(43) Date of publication:
**25.06.2008 Bulletin 2008/26**

(51) Int Cl.:
***C03B 29/02*** *(2006.01)*

(21) Application number: **07425808.8**

(22) Date of filing: **19.12.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **22.12.2006 IT RM20060691**

(71) Applicant: **F&C S.r.l.**
**00040 Pomezia (RM) (IT)**

(72) Inventor: **Mazzaroppi, Antonio**
**00040 Pomezia, Roma (IT)**

(74) Representative: **Iannone, Carlo Luigi et al**
**Barzano' & Zanardo Roma S.p.A.**
**Via Piemonte 26**
**00187 Roma (IT)**

(54) **Method and oven for heat soaked test on thermally tempered glasses for building use**

(57) Heating method and relevant oven for heat soaked tests on thermally tempered glasses, comprising using a heating oven (1000) for glasses (200) having a plurality of air heating means (112, 114) and a plurality of sensors (210) applied in set zones of glasses, said method being characterised in that a modular oven is employed, comprised of $m > 2$ independent oven modules $SU_1, SU_2, ..., SU_m$ (100), said modules (100) being arranged according to a row; one or more heating sections being defined in each module (100), for a total number of $SR_1, SR_2, ..., S_k$ sections (601, 602) in the oven (1000), $k \geq m$, an assembly of glasses (200) to be subjected to a test, and corresponding air heating means (112, 114), being associated to each section (601, 602); a reference or "master" heating section $SR_M$ being defined; heating sections (601, 602) different from the master section adjusting power of its own air heating means (112) in order to modify its own inner temperature following the temperature of the master section; adjustment of power of each section (601, 602) being carried out by an oven electronic processing and control unit on the basis of temperatures detected by said sensors (210) applied to the glasses (200) of each section (601, 602).

Fig. 1

EP 1 935 856 A2

**Description**

The invention concerns a method and oven for heat soaked test on thermally tempered glasses for building use.

More particularly, method according to the invention permits efficiently carrying out "head soaked test" on tempered glasses. Since it guarantees uniform heating fulfilling safety requirements. Oven according to the invention, thanks to its particular modular structure, permits carrying out method according to the invention and at the same time it is simple to be manufactured and easy to use.

"Heat soaked test" on thermally tempered glasses is made to verify if intrusions exists of nickel sulphide within tempered glasses. Nickel sulphide particles are released by refractory bricks while manufacturing glasses and creates problems only in case glass is tempered: in fact, heated glass could spontaneously explode due to the expansion of these intrusions.

The above test, already known in the field, accelerate possible explosion, while heating glass on the basis of set rules. Rule proposal on safety glass manufacturing and test methods EN 14179-1 sets that, particularly (Annex A, pp. 27-29) with respect to tests on realised glasses carried out within an oven:

    (a) glasses are subjected to set loads in positions indicated by the rules;
    (b) glasses are subjected to a temperature variation cycle within the oven on the basis of parameters and curves set by the rules;
    (c) a plurality of temperature sensors set by the rules are placed on the glass surface, in correspondence of the above loading zone (a).

Particularly, rules provide that glasses are kept for a set time period (2 hours) at a temperature of 290° $\pm$ 10°. Phase maintaining this temperature starts when the last sensor applied on glasses measures a temperature higher than or equal to 280°C.

Said rules do not provide technical indications about the way of obtaining a uniform heating of glass. Further, traditional ovens do not face up heat uniformity, factor that is very important for a good success of test, and thus for safety of those using the glasses subjected to test.

Heating uniformity is one of the technical problems not solved by known solutions. Another technical problem is that of providing an oven that can be easily conformed on the basis of the number of glasses to be subjected to treatment.

It is object of the present invention a method for a "heat soaked test" on tempered glasses overcoming the above drawbacks and solving problems of prior art.

It is further specific object of the present invention an oven implementing the method according to the invention, overcoming and solving problems of prior art.

It is therefore specific object of the present invention a heating method for heat soaked tests on thermally tempered glasses, comprising using a heating oven for glasses having a plurality of air heating means and a plurality of sensors applied in set zones of glasses, said method being characterised in that:

- a modular oven is employed, comprised of $m > 2$ independent oven modules $SU_1, SU_2, ..., SU_m$, said modules being arranged according to a row;
- one or more heating sections being defined in each module, for a total number of $SR_1, SR_2, ..., S_k$ sections in the oven, $k \geq m$, an assembly of glasses to be subjected to a test, and corresponding air heating means, being associated to each section;
- a reference or "master" heating section $SR_M$ being defined;
- heating sections different from the master section adjusting power of its own air heating means in order to modify its own inner temperature following the temperature of the master section;
- adjustment of power of each section being carried out by an oven electronic processing and control unit on the basis of temperatures detected by said sensors applied to the glasses of each section.

Preferably, according to the invention, difference between inner temperature of master section and inner temperature of a different section must be included within the range of $\pm$ 5°C.

Preferably, according to the invention, said inner temperature of each section is the average temperature measured by said sensors.

Preferably, according to the invention, each section comprises a further temperature sensor suitable to measure temperature of hot air created by said air heating means.

Preferably, according to the invention, said inner temperature of each section is an average between average temperature measured by said sensors and temperature of said hot air flow.

Preferably, according to the invention, having indicated by $\delta_1, \delta_2, ..., \delta_k$ relevant sensor groups applied on glasses associated to the corresponding k sections, sensor group of the master section being individuated by $k = M$, in case, after a cyclic control during said tracking, maximum value recorded by sensor group $S$ for the *I* section $SR_i$, is lower than a first set threshold and minimum value is lower than a second set threshold, value of power $P_j$ of air heating means of the *I* section $SR_i$ is set again according to formula:

$$P_i = P_M \cdot \left(1 + \frac{T_M - T_i}{T_M}\right) \cdot \left(1 + \frac{\overline{S_M} - \overline{S_i}}{\overline{S_M}}\right)$$

for each section $SR_i$, with *I* different from *M*, $T_i$ being the average temperature of said hot air flow for each section and $\overline{S_i}$ being the average of temperatures detected by said assembly of sensors $S_i$.

Preferably, according to the invention, in case , after a cyclic control during said tracking, maximum value recorded by sensor group $S_i$ for the *I* section $SR_i$, maximum value recorded by sensor group $S_i$ is lower than said first set threshold and minimum value is higher than said second set threshold, value of power $P_j$ of air heating means of the *I* section $SR_i$ is set again to value of zero.

Preferably, according to the invention, after a cyclic control during said tracking, maximum value recorded by sensor group $S_i$ for the *I* section $SR_i$, maximum value recorded by sensor group $S_i$ is higher or equal to said first set threshold and minimum value is lower than a third set threshold, value of power $P_j$ of air heating means of the *I* section $SR_i$ is set again to value of zero and hot air flow is interrupted for a set waiting time interval, after which values of said sensor groups are controlled.

Preferably, according to the invention, $k = m$, still more preferably $k = 2m$.

Preferably, according to the invention, said first threshold is 298°C, said second threshold is 282°C and said third threshold is 280°C.

Preferably, according to the invention, said air heating means comprise an electric resistance.

Preferably, according to the invention, master section is chosen within the central zone of the oven.

Preferably, according to the invention, said cyclic control occurs simultaneously for all the sections and it is carried out at very close time intervals so that temperature variation within the master section in the single time interval is negligible.

Preferably, according to the invention, said *m* modules are identical modules.

Preferably, according to the invention, said modules are put side by side and are integral each other.

It is further object of the present invention an oven for "heat soaked tests" on thermally tempered glasses, characterised in that it is a modular oven comprised of $m > 2$ independent oven modules $SU_1, SU_2, .., SU_m$, said modules being arranged side by side according to a row, one or more heating sections being defined in each module, for a total number of $SR_1, SR_2, ..., S_k$ sections in the oven, with $k \geq m$, each section comprising an assembly of glasses to be subjected to a test, and corresponding air heating means, said oven being apt to implement the method according to the invention.

Preferably, according to the invention, $k = m$, still more preferably $k = 2m$.

Preferably, according to the invention, said *m* modules are identical modules.

Preferably, according to the invention,, modules are one integral with the other ones.

Preferably, according to the invention,, each module has at least an upper chimney for evacuating heat during the test cooling step.

Preferably, according to the invention, each module is apt to receive a carriage on which glasses are laid down, guided by suitable introduction and extraction guide means.

Preferably, according to the invention, glasses are comprised of two assemblies, symmetrically placed with respect to a plane passing through an introduction longitudinal axis of said carriage and perpendicular with the basis of the same carriage, being thus defined two sections for each module, with air heating means provided on the sides of the module structure faced toward said plane.

The present invention will be now described, for illustrative but not limitative purposes, according to its preferred embodiments, with particular reference to the figures of the enclosed drawings, wherein:

figure 1 shows an embodiment of an oven module according to the invention;
figure 2 is a top view (a) and a lateral view (b) of an embodiment of an oven according to the invention comprised of four modules as shown in figure 1;
figure 3 shows an example of modular realisation of the oven according to the invention.

It must be immediately pointed out that, even if the title of the invention refers to glasses to be used in the building field, method and oven according to the invention can also be applied to tempered glassed to be used in different fields.

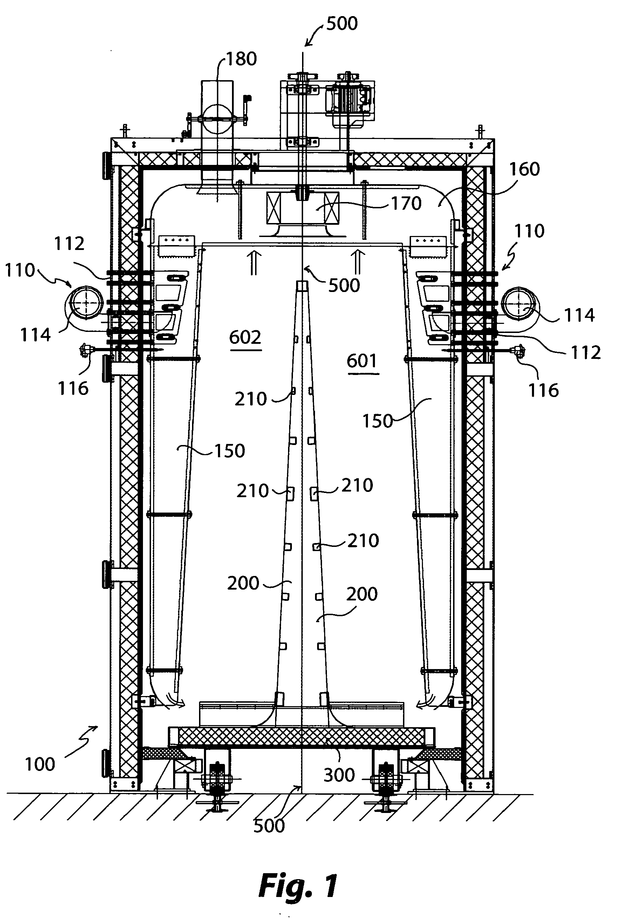

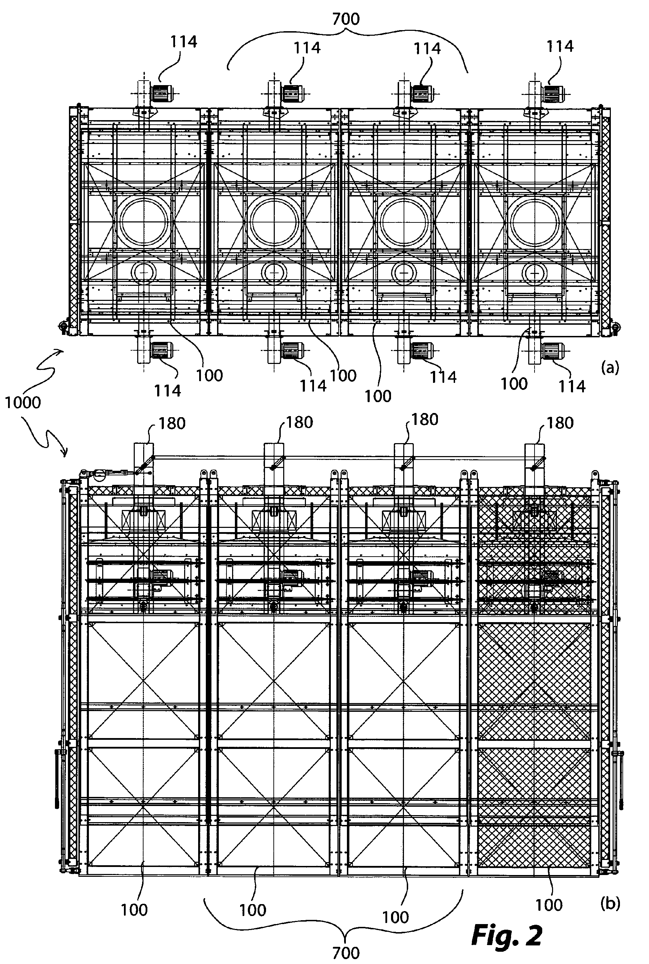

Making reference to figures 1 and 2, oven 100o according to the invention is comprised of modules 100 identical each other. Glasses 200 are placed on carriages 300, symmetrically with respect to a longitudinal - vertical plane 500, and introduced within oven 1000 modules 100 by suitable guides.

In the preferred embodiment, single module 100 has two lateral heating systems 110, comprising respective resistances 112 and fans 114. Sides interested are those parallel (or in any case faced toward) to said longitudinal - vertical plane 500.

Heated air is sent by fans within lateral ducts 150 until the bottom where air outflows and reaches glasses 200, on which sensors 210 are placed.

Hot air temperature is measured close to resistance 112, thanks to corresponding thermocouples 116.

Air, after having heated glasses outflows from the upper part of the oven within a duct 160 and is re-introduced within the lateral ducts 150, thanks to a fan 170.

Chimney 180 is opened during the cooling at the end of the test, for evacuation of hot air and fans 114 are activated.

Modules 100 described in the above are placed according to a row one behind the other and are made integral each other. They are controlled independently by a control and processing electronic unit (not shown).

The above structure of the module ensures a uniform heating within the same module. However, problem is also that of uniformly heating glasses within the assembled modular oven. In fact, in this case, proximity of other modules varies temperature distribution in an unpredictable way.

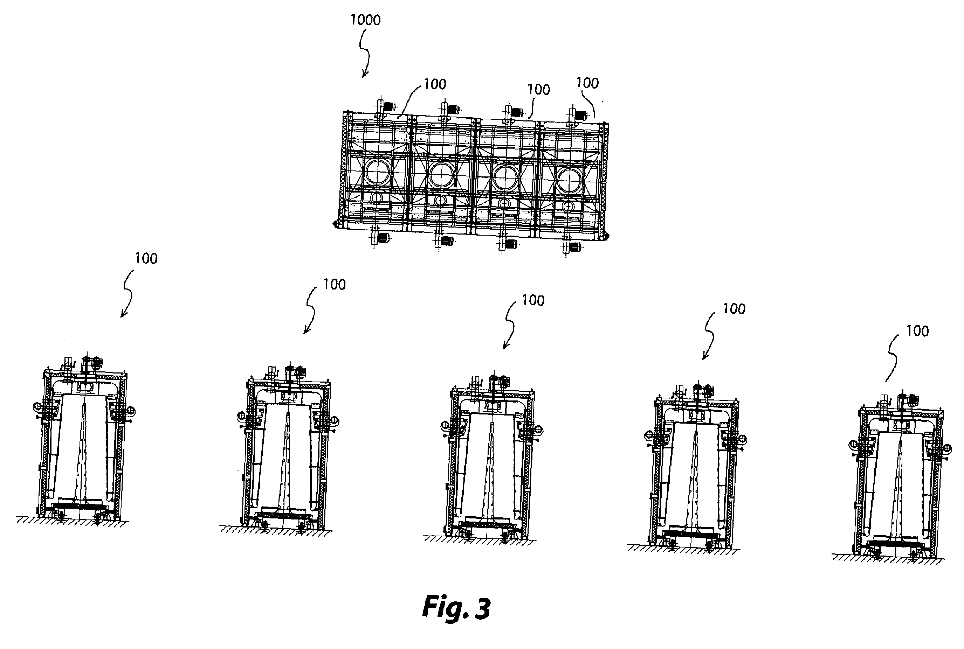

Making also reference to figure 3, it is thus convenient dividing single modules into lateral sections, each one of which is provided, as described in the above, with a resistance, with a fan and with a thermocouple for hot air. For the specific realisation of the oven according to the invention, different assembly of glasses 200 are into different sections. Sensors are fixed on said different glasses, as provided by the existing rules, said sensors measuring the surface temperature of the glass. Rules provide that 21 sensors are placed on glasses according to a set scheme.

If number of modules is $m > 0$, among the $n = 2m$ sections it is set a "master" section, preferably within the central region 700 of the oven, that will be subjected to a continuous heating according to a set curve. All the others $n-1$ sections will follow the instantaneous temperatures of the master section.

Tracking is made by processing and control unit on the basis of the following formulae.

Indicating by:

T1, T2, T3, T4, T5, T6, T7, T8, ..., $T_n$ = air temperature, respectively within duct of section 1, 2, 3, 4, 5, 6, 7, 8, ..., n n

P1, P2, P3, P4, P5, P6, P7, P8, ..., $P_n$ = delivered power respectively trough resistance 1, 2, ,3, 4, 5, 6, 7, 8,, .., n

S = assembly of the 21 probes put in contact with glasses

S1, S2, S3, S4, S5, S6, S7, S8, ..., Sn = assembly of probes placed on glasses that are on area of influence respectively of section 1, 2,3,4,5,6,7,8, ..., n

$\overline{S}_1, \overline{S}_2, \overline{S}_3, \overline{S}_4, \overline{S}_5, \overline{S}_6, \overline{S}_7, \overline{S}_8, \overline{S}_n =_n$ = average of temperatures detected by probes respectively within the assembly S1, S2, S3, S4, S5, S6, S7, S8, ..., Sn

M = identification of master section

PM = power delivered by master section

TM = temperature measured within duct of the master section

SM = assembly of probes placed on glass that are under the influence of the master section

$\overline{S}_M$ = average of temperatures detected by probes that are under the influence of the master section,

It is applied the following variation of power delivered by electric resistance 112 of each section except for the master section:

In case: *max $S_n$ < 298°C*

$$ P_n \; = \; P_M \; \bullet \; \left( 1 \; + \; \frac{T_M \; - \; T_n}{T_M} \right) \; \bullet \; \left( 1 \; + \; \frac{\overline{S_M} \; - \; \overline{S_n}}{\overline{S_M}} \right) $$

*max $S_n$ < 298°C*
In case:
*min $S_n$ > 282°C*
$P_n$ = 0 0
*max $S_n$ ≥ 298°C*
In case:
*min $S_n$ < 280°C*

$P_n = 0$

And fan 170 distributing hot air is switched off for a period of 10 minutes and then temperature control is started again.

Above formulae are applied according to very close time intervals and are based on the assumption that within said time intervals, temperature variation of master section is negligible.

Thus, not uniformity of heating of single sections are prevented and all glasses of each section reach the stationary step within the same time and with very close temperatures.

It must be noted that, although the invention is illustrated with two sections for each module, it is also possible providing a module with a single section (thus corresponding with the same module) or with more than two sections provided in a different way.

The solution according to the invention has the following advantages:

- possibility of precise control of distribution of temperature within the oven and on the glass plates;
- self-adaptation of program managing power delivered by resistances so as to permit concentrating heating where a bigger mass of glass is present (a higher number of plates, or thicker glass;
- energy saving since resistances are switched on only where and where it is necessary;
- protection of the glass subjected to test since rules imposes that during the cycle, probes temperatures must always be within the range 280°C - 300°C, otherwise test fails and must be repeated with a high energy waste: the inventive method always guarantees set times.

The present invention has been described for illustrative but not limitative purposes, according to its preferred embodiments, but it is to be understood that modifications and/or changes can be introduced by those skilled in the art without departing from the relevant scope as defined in the enclosed claims.

**Claims**

1. Heating method for heat soaked tests on thermally tempered glasses, comprising using a heating oven (1000) for glasses (200) having a plurality of air heating means (112, 114) and a plurality of sensors (210) applied in set zones of glasses, said method being **characterised in that**:

   - a modular oven is employed, comprised of $m > 2$ independent oven modules $SU_1, SU_2, ..., SU_m$ (100), said modules (100) being arranged according to a row;
   - one or more heating sections being defined in each module (100), for a total number of $SR_1, SR_2, ..., S_k$ sections (601, 602) in the oven (1000), $k \geq m,$ an assembly of glasses (200) to be subjected to a test, and corresponding air heating means (112, 114), being associated to each section (601, 602);
   - a reference or "master" heating section $SR_M$ being defined;
   - heating sections (601, 602) different from the master section adjusting power of its own air heating means (112) in order to modify its own inner temperature following the temperature of the master section;
   - adjustment of power of each section (601, 602) being carried out by an oven electronic processing and control unit on the basis of temperatures detected by said sensors (210) applied to the glasses (200) of each section (601, 602).

2. Method according to claim 1, **characterised in that** difference between inner temperature of master section and inner temperature of a different section (601, 602) must be included within the range of $\pm$ 5°C.

3. Method according to claim 1 or 2, **characterised in that** said inner temperature of each section (601, 602) is the average temperature measured by said sensors (210).

4. Method according to one of claims 1 - 3, **characterised in that** each section (601, 602) comprises a further temperature sensor (116) suitable to measure temperature of hot air created by said air heating means (112).

5. Method according to claim 4, **characterised in that** said inner temperature of each section (601, 602) is an average between average temperature measured by said sensors (210) and temperature of said hot air flow.

6. Method according to claim 5, **characterised in that** having indicated by $\delta_1, \delta_2, ..., \delta_k$ relevant sensor (210) groups applied on glasses (200) associated to the corresponding k sections (601, 602), sensor (210) group of the master section being individuated by $k = M,$ in case, after a cyclic control during said tracking, maximum value recorded by sensor group S for the *l section* $SR_i$, is lower than a first set threshold and minimum value is lower than a second set threshold, value of power $P_i$ of air heating means (112) of the *l section* $SR_i$ is set again according to formula:

$$P_i = P_M \cdot \left(1 + \frac{T_M - T_i}{T_M}\right) \cdot \left(1 + \frac{\overline{S_M} - \overline{S_i}}{\overline{S_M}}\right)$$

for each section $SR_1$, *with l different from M*, $T_i$ being the average temperature of said hot air flow for each section (601, 602) and $\overline{S_i}$ being the average of temperatures detected by said assembly of sensors $S_i$.

7. Method according to claim 6, **characterised in that**, in case , after a cyclic control during said tracking, maximum value recorded by sensor group $S_i$ for the *l section* $SR_i$, maximum value recorded by sensor group $S_i$ is lower than said first set threshold and minimum value is higher than said second set threshold, value of power $P_i$ of air heating means of the *l section* $SR_i$ is set again to value of zero.

8. Method according to claim 6 or 7, **characterised in that**, after a cyclic control during said tracking, maximum value recorded by sensor group $S_i$ for the *l section* $SR_i$, maximum value recorded by sensor group $S_i$ is higher or equal to said first set threshold and minimum value is lower than a third set threshold, value of power $P_i$ of air heating means (112) of the *l section* $SR$; is set again to value of zero and hot air flow is interrupted for a set waiting time interval, after which values of said sensor (210) groups are controlled.

9. Method according to one of claims 1 - 8, **characterised in that** $k = m$.

10. Method according to one of claims 1 - 8, **characterised in that** $k = 2m$.

11. Method according to one of claims 1 - 10, **characterised in that** said first threshold is 298°C, said second threshold is 282°C and said third threshold is 280°C.

12. Method according to one of claims 1 - 10, **characterised in that** said air heating means (112) comprise an electric resistance.

13. Method according to one of claims 1 - 11, **characterised in that** master section is chosen within the central zone (200) of the oven (2000).

14. Method according to one of claims 1 - 13, **characterised in that** said cyclic control occurs simultaneously for all the sections (601, 602) and it is carried out at very close time intervals so that temperature variation within the master section in the single time interval is negligible.

15. Method according to one of claims 1 - 14, **characterised in that** said m modules are identical modules (100).

16. Method according to one of claims 1 - 15, **characterised in that** said modules are put side by side and are integral each other.

17. Oven for "heat soaked tests" on thermally tempered glasses, **characterised in that** it is a modular oven (1000) comprised of $m > 2$ independent oven modules $SU_1, SU_2, ..., SU_m$, (100) said modules being arranged side by side according to a row, one or more heating sections being defined in each module, for a total number of $SR_1, SR_2, ...,$ $S_k$ sections in the oven, with $k \geq m$, each section comprising an assembly of glasses (200) to be subjected to a test, and corresponding air heating means (112, 114), said oven (1000) being apt to implement the method according to from claims 1 to 16.

18. Oven according to claim 17, **characterised in that** $k = m$.

19. Oven according to claim 17, **characterised in that** $k = 2m$.

20. Oven according to one of claims 17 - 19, **characterised in that** said m modules (100) are identical modules.

21. Oven according to one of claims 17 - 20, **characterised in that** modules are one integral with the other ones.

**22.** Oven according to one of claims 17 - 21, **characterised in that** each module (100) has at least an upper chimney (180) for evacuating heat during the test cooling step.

**23.** Oven according to one of claims 17 - 22, **characterised in that** each module (100) is apt to receive a carriage (300) on which glasses (200) are laid down, guided by suitable introduction and extraction guide means.

**24.** Oven according to claim 23 when depending from claim 19, **characterised in that** glasses (200) are comprised of two assemblies, symmetrically placed with respect to a plane (500) passing through an introduction longitudinal axis of said carriage (300) and perpendicular with the basis of the same carriage, being thus defined two sections (601, 602) for each module (100), with air heating means (112, 114) provided on the sides of the module (100) structure faced toward said plane (500).

*Fig. 1*

Fig. 2

Fig. 3